(19) Europäisches Patentamt
European Patent Office
Office européen des brevets

(11) **EP 1 936 355 A1**

(12) **EUROPEAN PATENT APPLICATION**

(43) Date of publication:
**25.06.2008 Bulletin 2008/26**

(51) Int Cl.:
**G01N 21/17** *(2006.01)*

(21) Application number: **06026139.3**

(22) Date of filing: **18.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **ETH Zürich**
**8092 Zürich (CH)**

(72) Inventors:
• **Sigrist, Markus**
**8308 Illnau/ZH (CH)**
• **Rey, Julien**
**3978 Flanthey/VS (CH)**

(54) **Differential photoacoustic detection of gases**

(57) A photoacoustic method for gas detection, named "Differential Mode Excitation Photoacoustic Spectroscopy (DME-PAS)", a detector for carrying out the method, and a specifically adapted photoacoustic cell are disclosed. At least two optical beams (A, B) are passed into a photoacoustic cell (10) capable of at least two fundamental acoustic resonances, and the relative intensities of these resonances or of harmonics thereof are determined. One of the beams is passed through the analyte gas before entering the photoacoustic cell, whereby the beam is attenuated. This affects the relative intensities of the resonances. From the relative intensities, the concentration of the target gas in the analyte gas can be determined. The method is species-selective even when a broadband light source is employed. The derived gas concentration is affected neither by intensity fluctuations of the light source nor by any microphone and/or electronics drifts.

FIG. 1

EP 1 936 355 A1

**Description**

**Field of the invention**

The present invention relates to a method of photoacoustic detection of gases, to a related device, and to a specifically adapted photoacoustic resonance cell.

**Background of the invention**

Gas sensors based on photoacoustic (PA) spectroscopy are well-established sensing devices thanks to their intrinsically high sensitivity, large dynamic range, and comparatively simple experimental set-up [1-3]. The PA effect consists in the conversion of absorbed light energy into acoustical waves which can be detected with microphones [1, 4, 5]. In contrast to transmission spectroscopy where a small power decrease along the gas sample needs to be detected, PA spectroscopy allows direct measurement of the small fraction of light absorbed by the gas sample. The amplitude of a PA signal depends on the power of the exciting light beam, the response function of the microphone, the nature and pressure of the gas present in the PA cell and on the geometry of the cell.

Since the PA signal is generated and detected in a cell that contains the gas under investigation, the shape of the PA cell is of prime importance and many different designs have been proposed. For a review, see in particular Ref. [3] and references therein. For another example, see C. Haisch, R. Niesser: Spectroscopy Europe 14/5 (2002).

To increase the signal-to-noise ratio (SNR) of PA sensors, modulation frequencies in the kHz range were introduced since external acoustic noise and microphone noise presents a characteristic 1/f frequency dependence. The sensitivity of PA cells has also been improved by acoustic amplification of the PA signal using acoustic resonant PA cells [4-10]. Resonant cells have also been designed for multipass [11, 12], intracavity [13, 14] or parallel [15] operation. Synchronous cell window noise has been minimized by introducing acoustic baffles [16] and by the development of a "windowless" [17], differential [18, 19] or quartz enhanced [20] PA cell.

Optical correlation spectroscopy is a means of selectively detecting gases using broadband light sources. This technique uses a cell filled with the gas of interest as a selective spectral filter or detector. Although not as fundamentally sensitive as laser-based detection systems that offer superior spectral purity and higher power density, it has many real-world advantages. It covers a large wavelength range, it is simple and cost-effective and, unlike laser systems, it is relatively immune to the problems of coherent sources that can exhibit multi-path interference effects (fringes). When using broadband light sources (e.g. black-body), simple spectral bandpass filters are usually inadequate for gas sensing because of their poor selectivity toward chemical species. This drawback can be avoided by using optical correlation techniques where the gas cell provides the required spectral selectivity. Optical correlation combined with PA spectroscopy enabled the development of selective gas detectors [21-23].

Specific aspects of PA spectroscopy are disclosed in the following documents:

- US 2005/0070803, relating to multiphoton PA spectroscopy;
- US 2006/0123884, relating to doubly resonant PA spectroscopy;
- WO 03/083455, relating to a differential method of photoacoustic spectroscopy in which the exciting light beam only enters one of two identical acoustic resonators; and
- US 7,004,909, relating to a specific setup for photoacoustic spectroscopy.

In most known photoacoustic sensing schemes, the absolute values of the microphone signal amplitude and/or phase are measured. Since the photoacoustic signal depends on the intensity of the excitation light source used, some kind of intensity normalization schemes (power meters and/or reference cells) are required for quantitative measurements. While this reduces the susceptibility to intensity fluctuations of the light source, costs are increased. Furthermore, most known methods are susceptible to microphone and/or electronics drifts.

**Summary of the invention**

It is a first object of the present invention to provide a simple and robust method for gas detection by the photoacoustic effect that is selective for a specific gas species (the target gas) in an analyte gas and that exhibits a reduced sensitivity to fluctuations in the intensity of the light source and to microphone and/or electronics drifts.

This object is achieved by a method according to claim 1. The method comprises the following steps:

(a) generating at least two optical beams;
(b) passing at least one of said beams through the analyte gas so as to attenuate said beams differently by said analyte gas;

(c) passing said beams into a photoacoustic cell capable of at least two fundamental acoustic resonances, said cell containing the target gas, wherein the beams have different optical paths in the photoacoustic cell;

(d) detecting photoacoustic signals from the photoacoustic cell;

(e) from said photoacoustic signals, determining the relative intensities of at least two acoustic resonances of said photoacoustic cell;

(f) from the relative intensities, determining a measure for an amount or concentration of the target gas in the analyte gas.

It is a further object of the present invention to provide a gas detector based on the photoacoustic effect that is selective for a specific gas species in an analyte gas and that exhibits a reduced sensitivity to fluctuations in the intensity of the light source and to microphone and/or electronics drifts.

It is yet another object of the present invention to provide a device that is particularly suited for carrying out the method of the present invention.

These objects are achieved by a photoacoustic gas detector for detecting a target gas in an analyte gas according to claim 5. The proposed detector comprises:

a beam shaping arrangement for generating at least two optical beams from light entering said arrangement, each of said beams defining an optical path;

a sample cell for receiving the analyte gas, the sample cell being disposed in the path of at least one of said beams in a manner that said beams are attenuated differently by said analyte gas;

a photoacoustic cell for receiving said target gas, said photoacoustic cell being capable of at least two fundamental acoustic resonances and being disposed behind the sample cell in the optical paths of both said beams, wherein the optical paths of said beams in said photoacoustic cell are different;

an acoustic detector for detecting acoustic signals in the photoacoustic cell.

It is yet another object of the present invention to provide a PA cell that is specifically adapted for carrying out the proposed method.

This object is achieved by a photoacoustic cell according to claim 13. The proposed cell has a tubular shape and comprises at least a first, a second and a third section, the sections being coaxial, the second section being disposed between the first and the third section and having a smaller diameter than the first and third sections, and the first and third sections having different lengths. Each section preferably has the shape of a regular cylinder. The length of the cell is preferably larger than its largest diameter. The diameters of the first and the third sections are preferably substantially the same. The cell is preferably fitted with at least one entry window permitting at least two different beams to enter the cell in a manner that the beams have different optical paths within the cell.

Advantageous embodiments of the method, PA detector and PA cell of the present invention are apparent from the dependent claims.

The proposed method may be called "Differential Mode Excitation Photoacoustic Spectroscopy (DME-PAS)". The method relies on the idea that two or more spatially different beams passing through the target gas in the same (resonant) PA cell will differently excite two or more different acoustic resonances (acoustic modes) of the cell. In operation both or all beams enter the PA cell. This leads to a mode amplitude ratio that depends on the intensity ratio of the beams reaching the PA cell. Placing a sample cell into one of the beams in front of the PA cell yields a mode amplitude ratio that depends on the absorption in the sample cell. In this manner the absorption coefficient and, in consequence, the concentration of the target gas in the analyte gas can be derived. This has the key advantage that the obtained ratio, and therefore the gas concentration, is unaffected by intensity fluctuations of the light source and by microphone and/or electronics drifts. Another valuable advantage is the reduced photoacoustic frequency drift since the sample does not need to be flown through the photoacoustic cell. Furthermore a large gas concentration can be used in the PA cell in order to compensate if low light input power is used (as it is commonly the case if broadband light sources are used). The last benefit of the proposed technique originates from the optical correlation principle, which allows the photoacoustic detector to be cost-effective and highly selective.

The proposed sensor can be used for gas analysis in many different fields of application, e.g., in food and beverage, medical, environmental, health and safety, industrial process monitoring, chemical or forensic applications.

In the proposed method the relative intensities or amplitudes of at least two acoustic resonances are monitored. If only the first of the beams is allowed to enter the PA cell, the first resonance is excited with a first intensity, while the second resonance is excited with a second intensity. If, on the other hand, only the second beam is allowed to enter the cell, generally again both resonances will be excited, albeit at different intensities. Therefore, the intensity ratio of the resonances is a sensitive measure of the relative intensities of the two beams. If one of the beams is attenuated by the target gas before entering the PA cell, the relative intensities of the resonances will change, and this can be used to detect and quantitatively measure the target gas. This can readily be generalized to a situation with more than two beams and/or more than two resonances.

It should be noted that the proposed method is intrinsically species-selective because an optical correlation principle is employed. The target gas in the PA cell will only be excited by those spectral components of the light entering the PA cell that match an absorption wavelength of the target gas. Light at other wavelengths will pass through the PA cell essentially without being attenuated and/or absorbed. Therefore, only changes of the incident beams at the absorption wavelengths of the target gas will affect the intensity ratio of the acoustic resonances in the PA cell. In other words, such changes will only be detected if a gas is present in the sample cell that has at least one overlapping absorption line/band with the target gas. This requirement will normally only be fulfilled for the target gas itself. Therefore, the detection is selective to the target gas (or to a plurality of target gases, if a gas mixture is used in the PA cell). This allows for the use of a broadband light source such as a blackbody emitter (a broadband light source being defined as a light source having a bandwidth much larger than the width of a typical absorption line of the target gas). In order to somewhat reduce the bandwidth of the incident light, a bandpass filter may be employed. While the use of a broadband light source is particularly economical, also narrowband light sources such as lasers may be employed. The light employed in the present invention may be in the visible range, infrared (IR) and/or UV regions of the electromagnetic spectrum.

Preferably the acoustic resonances excited in the PA cell are longitudinal resonances. However, in principle it is also possible to use other modes, such as azimuthal or radial modes. Generally the acoustic resonances should not be harmonics/subharmonics of each other, but should correspond to different fundamental modes of the PA cell or to harmonics of such different fundamental modes. In particular, the above-described tubular cell design with three coaxial sections having different diameters is particularly suited for the excitation of longitudinal modes. In this embodiment preferably both (or, in the case of more than two beams, all) optical beams are able enter the first section, whereas at least one of said beams cannot enter the second section. In this manner, the requirement of different paths of the beams within the cell is automatically fulfilled.

While the use of a cell with different coaxial sections is preferred, many other shapes are of course possible, and the preferred design will largely depend on the type of resonance modes to be excited in the cell. The PA cell will generally have at least one entry window allowing the beams to enter the cell. The beams may be allowed to exit the cell through one or more exit windows, or one or more of the beams may be reflected and/or absorbed by the cell walls instead. The beams can be parallel, or they can have different spatial orientations relative to each other.

The method of the present invention may be implemented either as a continuous-wave (cw) method, as a pulsed method or as a wavelength-modulation method.

In a cw method, the light of the optical beams is amplitude-modulated (or in other words, intensity-modulated) at some modulation frequency by a suitable modulator. The modulation frequency is varied with time, either continuously or by switching the frequency between discrete values, and the acoustic signals are detected at least at modulation frequencies that are at or near the respective acoustic resonance frequencies. Amplitude modulation may be achieved by employing a chopper (mechanical or electro-optical), or by modulating the light intensity electronically at the light source, as it is possible in particular for diode lasers. The modulation depth may be 100%, i.e., the beams may be interrupted completely in the dark phases of the amplitude modulation, or it may be less than 100%. Sensitive detection can be achieved by employing a lock-in amplifier that acts as an extremely narrow-band filter at the modulation frequency.

In contrast, in a pulsed method, the light of the optical beams is provided in the form of short pulses, the pulse length generally being shorter than the characteristic time or relaxation time of the acoustic processes generated by each pulse, and the (transient and rapidly decaying) photoacoustic signal generated in response to the pulses is recorded in the time domain by a suitable transient recorder. This time-domain signal is subsequently transformed into the frequency domain by a Fourier transform, or it is analyzed by other suitable and well known methods for spectral analysis (other kinds of transforms, statistical methods such as maximum entropy methods etc.) in order to determine a measure for the relative intensities or amplitudes of the resonances that are used for detection.

Using the wavelength-modulation method a narrow wavelength portion of light (e.g. such as the one emitted by a laser diode) is used. Modulating the wavelength of the narrowband light source and sending it through a sample of interest having an absorption band/line within the wavelength range of the modulated light source leads to modulated absorption that can be detected with the photoacoustic method.

For the detection of the PA signals, any known arrangement may be employed. In particular, a microphone such as an electret or condenser microphone may be used, or a so-called "optical microphone", in which the deflection of a light beam by a vibrating membrane or grating is detected, may be employed.

From the above description, it should be clear that, depending on the mode of operation (cw, pulsed or wavelength-modulation), a different analyzing module for receiving the PA signals from the acoustic detector will be employed. In any event the analyzing module will be specifically adapted for determining the relative intensities of the acoustic resonances and for deriving a measure of an amount of the target gas from these resonances. Suitable analyzing modules are well known in the art.

**Brief description of the drawings**

The invention will be described in more detail in connection with an exemplary embodiment illustrated in the drawings, in which

Fig. 1     shows a schematic representation of a DME-PAS arrangement used in this work;
Fig. 2     shows a diagram representing the PA cell frequency response with light excitation in its first tube only (i.e. beam B only, beam A blocked);
Fig. 3     shows a diagram representing the PA cell frequency response with light excitation along the whole cell (i.e. beam A only, beam B blocked).
Fig. 4     shows a diagram representing the mode amplitude ratio ($S_{lf}/S_{hf}$) versus light intensity fraction of beam A (i.e. $I^A/(I^A+I^B)$); and
Fig. 5     shows two diagrams representing amplitudes ($S_{lf}$ and $S_{hf}$) (upper diagram) and their ratio ($S_{lf}/S_{hf}$) (lower diagram) versus acetone concentration.

**Detailed description of the invention**

The following description relates to an advantageous embodiment of the proposed method and devices. This description is to be understood to be nonlimiting, and many other embodiments of the proposed method and devices are possible. In the following, an example of a robust and simple gas sensor based on the novel PA scheme "Differential Mode Excitation Photoacoustic Spectroscopy (DME-PAS)" is discussed. This technique relies on the selective excitation of at least two different resonant modes in a specially designed photoacoustic cell. The presented device uses a blackbody light source for simplicity and is combined with optical correlation to provide a good selectivity. Experimental measurements of acetone vapor are presented to demonstrate the capabilities of the DME-PAS device. These experimental results are also compared to a theoretical model describing the device response to acetone concentration variations.

<u>Experimental arrangement</u>

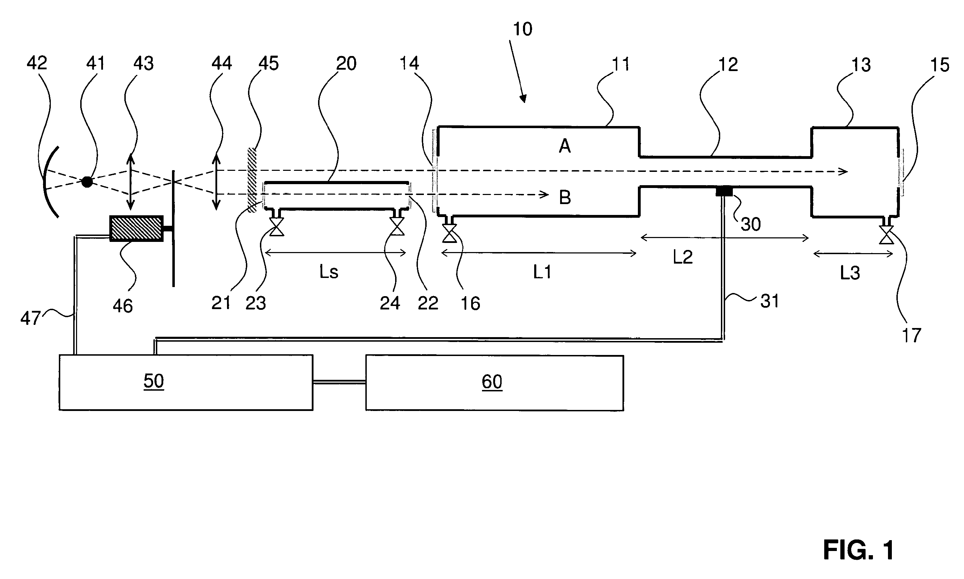

A possible experimental arrangement is depicted in Fig. 1. A broadband excitation light source 41 comprises a FecrAl alloy (Kanthal) wire heated up to 900 °C with a DC electric current (5.5 V, 1.7 A). The emitted light is collected and focused with a spherical mirror 42 and a ZnSe lens 43. A mechanical chopper 46 (PTI, OC4000) is placed at the focus, and a second ZnSe lens 44 collimates the amplitude-modulated light into a parallel beam with a diameter of ca. 40 mm. The spectral bandwidth is reduced with an optical bandpass filter 45 having a 1940-1580 cm$^{-1}$ transmission range. A part of the chopped and filtered beam is further passed through a sample cell 20 before reaching a PA cell 10. The sample cell 20 contains the gas whose concentration is to be determined (the analyte gas). After passing the chopper 46, the windows and the optical filter 45, the total light power entering the PA cell 10 is about 0.5 mW.

The PA cell 10 comprises three cylindrical sections or tubes 11, 12 and 13. The excitation beam first strikes the longest one (length L1 = 140 mm, diameter 60 mm). The part of the beam (denoted with B in Fig.1 ) that traveled through the sample cell 20 does not reach the second tube 12 (length L2 = 120 mm, diameter 20 mm) while the rest (denoted with A in Fig.1) is allowed to propagate to the last tube 13 (length L3 = 60mm, diameter 60 mm). All windows 14, 15, 21, 22 are perpendicular to the beam and made of uncoated ZnSe. The central cylinder 12 is fitted with an electret microphone 30 (Knowles, EK-3133). The microphone signal is pre-amplified, transmitted through a cable 31 and monitored by a lock-in amplifier 50 (Stanford Research Systems SR530) locked to the chopper frequency (a chopper signal being transmitted to the lock-in amplifier through cable 47). The frequency and the PA signal amplitude are transferred to a computer 60 and recorded.

In order to test the PA device, gaseous samples with different acetone concentrations were prepared by using dynamic headspace extraction [24]. With this technique, a part of a volatile sample is vaporized by continuously bubbling a gas through its liquid phase. Pure liquid acetone (Merck, pro analysis) was used in the bubbling flask and its temperature stabilized at T = 295 K with a thermostatic bath (Huber, TC50). To vaporize the liquid acetone contained in the bubbling flask, room air was employed as bubbling/carrier gas, and a fritted head was used to reduce bubble size and to improve acetone evaporation. The resulting acetone-containing air-flow was then diluted with room air using a mass-flow controller gas-mixing unit (Sierra, Serie800). Using this setup, two acetone/air flows were generated. The first flow (ca. 30 ml/min) was maintained with an acetone concentration around 11 %vv and was sent to the PA cell, while the acetone concentration of the second gas mixture, flowing through the sample cell, could be varied in real-time.

Results and discussion

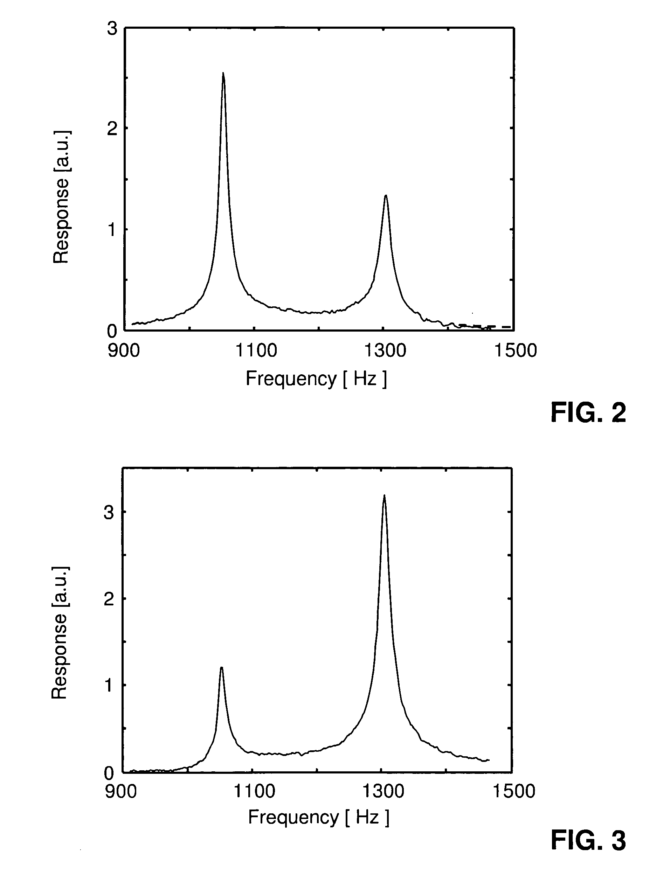

The frequency response of the DME-PAS device has been investigated using the sample cell filled with room air and the PA cell filled with a 11.1 %vv acetone / room air mixture at 980 mbar and 295 K. The solid line in Fig. 2 shows the measured frequency response when only the first tube of the PA cell is excited. This is done by blocking beam A in Fig. 1 (the one passing through the whole PA cell) and exciting the cell with beam B exclusively. Fig. 2 points out two resonances with maxima at 1052.2 Hz and 1305.2 Hz and full width at half maximum (FWHM) of 19.2 Hz and 27.9 Hz respectively. The amplitude ratio of the 1052 Hz resonance to the 1305 Hz one is 1.93, the low frequency resonance being stronger than the high frequency one. The opposite is obtained (Fig. 3) when the PA cell is excited with beam A only (beam B blocked, all the PA cell cylinders excited). In this case, two resonances are still present with the same positions and FWHM as above but the amplitude ratio is now 0.39 corresponding to a high frequency resonance stronger than the low frequency one.

The amplitude ratio of the two resonances thus critically depends on the type of PA excitation.

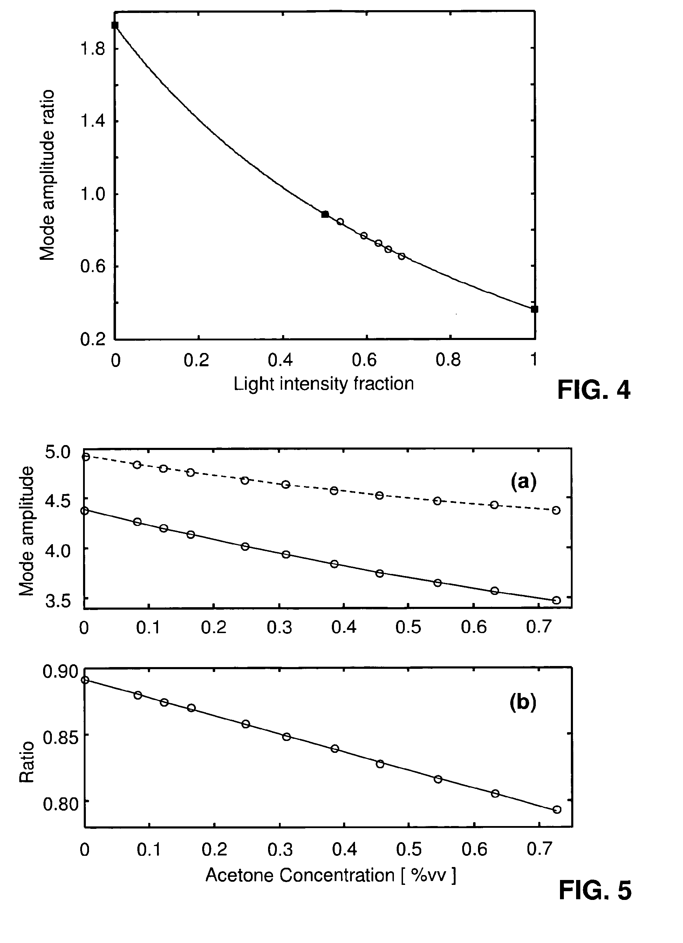

Letting both beams A and B enter the PA cell simultaneously results in a frequency response corresponding to the sum of the two independent spectra described above. The full squares in Fig.4 represent the experimental mode amplitude ratios when the cell is excited with either beam A only (right square), beam B only (left square) or with both of them simultaneously (middle square). The maximum PA amplitude of each resonant mode has been used as a measure of the mode amplitude since the two resonances are clearly separated and have defined lineshapes (see Figs 2 and 3). To describe the dependence of the mode amplitude ratio on the intensity ratio of the two beams A and B, a simple linear model is derived:

$$S_{lf} \ = \ I^A \ S_{lf}^A \ + \ I^B \ S_{lf}^B \ = \ I^0 \left( X^A \ S_{lf}^A \ + \ X^B \ S_{lf}^B \right) \qquad\qquad \text{(Eq. 1)}$$

$$S_{hf} \ = \ I^A \ S_{hf}^A \ + \ I^B \ S_{hf}^B \ = \ I^0 \left( X^A \ S_{hf}^A \ + \ X^B \ S_{hf}^B \right) \qquad\qquad \text{(Eq. 2)}$$

Here, $S_{lf}$ and $S_{hf}$ correspond to the PA signal amplitude of the low and high frequency modes respectively, with excitation intensity $I^A$ along beam A and $I^B$ along beam B. $X^A$ and $X^B$ represent the ratios ($I^A / I^0$ and $I^B / I^0$ resp.) of the excitation intensity to the total lamp intensity ($I^0$). The other symbols ($S_{lf}^A$, $S_{lf}^B$, $S_{hf}^A$ and $S_{hf}^B$) are constants given by the experimental mode amplitudes when either beam A or beam B is blocked. Eqs. (1) and (2) imply that the mode amplitude ratio (i.e. $S_{lf} / S_{hf}$ does not depend on the total beam intensity ($I^0$) but on intensity ratio $I^A / I^B = X^A / X^B$ of the two beams. This has been verified experimentally since no significant change in the ratio of the mode amplitude could be detected by varying the emitted intensity ($I^0$) of the black-body source by 20%. Nevertheless, the mode amplitude ratio depends on the intensity ratio $I^A / I^B$ of the two beams reaching the PA cell. In order to investigate the behaviour of the amplitude ratio when the light intensity fraction of beam A changes, the PA amplitudes at both resonance modes were measured for different absorption coefficients in the sample cell. This allowed to reduce the intensity absorbed in the PA cell for beam B down to 47% of its initial value. The circles in Fig.4 present the observed amplitude ratios when the intensity of the beam B is successively reduced, corresponding to an increase of the light intensity fraction (i.e. $I^A / (I^A+I^B)$) for beam A. The full line shows the ratios calculated with the linear model presented above. The excellent agreement between the measured and calculated data confirms the ability of the linear excitation model to describe the experimental double beam excitation of each PA cell mode. Furthermore this also confirms its capability to predict the mode amplitude ratio change when the beam intensity ratio is varied.

Since the mode amplitude ratio depends on the intensity ratio of the beams reaching the PA cell, which in turn depends on the light absorption in the sample cell, the mode amplitude ratio provides a means to determine the acetone concentration in the sample cell. The circles in Fig.5a represent the experimental amplitudes of the two PA modes for different acetone concentrations in the sample cell. The larger PA signal amplitudes correspond to the resonance at 1303.5 Hz whereas the smaller amplitudes refer to 1050.5 Hz. The experimental noise attached to the PA signal amplitude is ca. 0.3% ($1\sigma$, 1s integration time). The solid and dashed lines show the calculated amplitudes for the two modes using the linear model presented above. The experimental mode amplitude ratios (i.e. the ratios between the PA signal amplitude of the lower to that of the higher resonance frequency) are given in Fig.5b. The corresponding experimental noise is smaller than 0.3% and thus comparable to the noise of the PA signal amplitude. The full line in this figure is a linear fit (least square regression) of the experimental data points. This linear behaviour is due to the small variation of the acetone concentration in the sample cell. To investigate the repeatability of the PA system, the mode amplitude ratios were measured when the gas concentration was alternatively switched between 0.07%vv and 0.38%vv. Using a 1s integration time, a 0.36% repeatability (1σ) is obtained for the mode amplitude ratio corresponding to a limit of detection of 25 ppm m$^{-1}$ for acetone. This detection limit is obtained with a total of ca. 0.5mW of broadband light intensity entering the PA cell, which is quite low for a PA scheme for which usually coherent narrowband sources with power levels of mW to Watt are used. Flowing the gas of interest through the sample cell allows the acetone concentration, the pressure and the temperature in the PA cell to be kept constant, avoiding any drift of its frequency response. The main benefit of the DME-PAS scheme is its immunity toward intensity fluctuations of the light source.

Conclusion

A novel PA scheme based on the differential mode excitation of a PA cell with two close resonant modes is presented. In the DME-PAS scheme presented here, two excitation beams are sent to the PA cell and their intensity ratio affects the resulting mode amplitude ratio. Placing a sample cell into one of the beams yields a mode amplitude ratio that depends on the absorption in this sample cell. This allows to determine the gas concentration in the sample cell. The DME-PAS has the main advantage of being unaffected by intensity fluctuations of the light source and by any microphone drifts. Another advantage is the reduced PA frequency drift since samples are not required to be flown through the PA cell itself. Furthermore, a large gas concentration can be used in the PA cell in order to compensate for low light input power. Another benefit of the proposed technique originates from the optical correlation principle, which allows the PA detector to be cost-effective and highly selective. All these key advantages of DME-PAS show its high potential for industrial gas sensing where cost and reliability are of prime importance.

References

[1] M.W. Sigrist: Air Monitoring by Laser Photoacoustic Spectroscopy. In: Air Monitoring by Spectroscopic Techniques (Chemical Analysis Series 127), ed. by M.W. Sigrist (Wiley, New York 1994) Chap.4
[2] F.J.M Harren, G. Cotti, J. Oomens, S. te L. Hekkert: Photoacoustic Spectroscopy in Trace Gas Monitoring. In: Encyclopedia of Analytical Chemistry 3, ed. by R.A. Meyers (Wiley, Chichester 2000) p.2203
[3] A. Miklòs, P. Hess: Rev. Sci. Instrum. 72, 1937 (2001)
[4] V.P. Zharov, V.S. Letokhov: Laser Optoacoustic Spectroscopy, Springer Ser. Opt. Sci., 37 (Springer, Berlin 1986)
[5] P. Hess: Top. Curr. Chem. 111, 1 (1983)
[6] R. Gerlach, N.H. Amer: Appl. Phys. 23, 319 (1980)
[7] A. Karbach, P. Hess: J. Chem. Phys. 84, 2945 (1986)
[8] C. Hornberger, M. König, S.B. Rai, W. Demtröder: Chem. Phys. 190, 171 (1995)
[9] F.G.C. Bijnen, F.J.M. Harren, J. Reuss: Rev. Sci. Instrum. 67, 2914 (1996)
[10] M. Mattiello, M. Niklès, S. Schilt, L. Thévenaz, A. Salhi, D. Barat, A. Vicet, Y. Rouillard, R. Wener, J. Koeth: Spectrochim. Acta A 63, 952 (2006)
[11] K.P. Koch, W. Lahmann: Appl. Phys. Lett. 32, 289 (1978)
[12] M. Naegele, M.W Sigrist: Appl. Phys. B 70, 895 (2000)
[13] F.J.M. Harren, F.G.C. Bijnen, J. Reuss, L.A.C. J. Voesenek, C. W.P.M. Blom: Appl. Phys. B 50, 137 (1990)
[14] F.J.M. Harren, R. Berkelmans, K. Kuiper, S. te Lintel Hekkert, P. Scheepers, R. Dekhuijzen, P. Hollander, D. H. Parker: Appl. Phys. Lett. 74, 1761 (1999)
[15] J.P. Besson, S. Schilt, E. Rochat L. Thévenaz: Spectrochim. Acta A 63, 899 (2006)
[16] C.F. Dewey: Optoacoustic Spectroscopy and Detection, ed. by Y. H. Pao (Academic Press, New York 1977)
[17] A. Miklòs, A. Lörincz: Appl. Phys. B 48, 213 (1989)
[18] A. Miklòs, P. Hess, A. Mohàcsi, J. Sneider, S. Kamm, S. Schaefer: Photoacoustic and Photothermal Phenomena: 10th International Conference, ed. by F. Scudieri and M. Bertolotti, AIP Conf. Proc. 463 (AIP, Woodbury 1999) p.126
[19] V. Zeninari, V.A. Kapitanov , D. Courtois, Yu.N. Ponomarev: Infrared. Phys. & Technol. 40, 1 (1999)
[20] A.A. Kosterev, F.K. Tittel, D.V. Serebryakov, A.L. Malinovsky, I.V. Morozoy: Rev. Sci. Instrum. 76, 043105 (2005)
[21] K. F. Luft: Z. Tech. Phys. 5, 97 (1943)
[22] W. G. Fastie, A. H. Pfund: J. Opt. Soc. Am. 37, 762 (1947).
[23] S H Chan: Meas. Sci. Technol. 7, 1776 (1996)
[24] B. Kolb: J. Chromatogr. A 842, 163 (1999)

**List of reference symbols**

| 10 | Photoacoustic cell |
|---|---|
| 11 | First region |
| 12 | Second region |
| 13 | Third region |
| 14 | Entry window |
| 15 | Exit window |
| 16 | Valve |
| 17 | Valve |
| 20 | Sample cell |
| 21 | Entry window |
| 22 | Exit window |
| 23 | Valve |
| 24 | Valve |
| 30 | Microphone |
| 31 | Cable |
| 41 | Black-body light source |
| 42 | Mirror |
| 43 | Lens |
| 44 | Lens |
| 45 | Optical filter |
| 46 | Chopper |
| 47 | Cable |
| 50 | Lock-in amplifier |
| 60 | Computer |
| A | Partial beam |
| B | Partial beam |
| Ls | Length of sample cell |
| L1 | Length of first region |
| L2 | Length of second region |
| L3 | Length of third region |

**Claims**

1. A method for photoacoustic detection of a target gas in an analyte gas, the method comprising:

(a) generating at least two optical beams (A, B);
(b) passing at least one of said beams (B) through the analyte gas so as to attenuate said beams differently by said analyte gas;
(c) passing said beams (A, B) into a photoacoustic cell (10) capable of at least two fundamental acoustic resonances and containing the target gas, said beams (A, B) having different optical paths in the photoacoustic cell (10);
(d) detecting photoacoustic signals from the photoacoustic cell (10);
(e) from said photoacoustic signals, determining the relative intensities of the at least two fundamental acoustic resonances of said photoacoustic cell or of harmonics thereof;
(f) from the relative intensities, determining a measure for an amount or concentration of the target gas in the analyte gas.

2. The method of claim 1, wherein said fundamental acoustic resonances are longitudinal resonances.

3. The method of claim 1 or 2, wherein the optical beams (A, B) are generated by a broadband light source (41).

4. The method of one of the preceding claims, wherein the optical beams (A, B) are amplitude-modulated at a common modulation frequency, wherein the modulation frequency is varied with time, and wherein the acoustic signals are detected at modulation frequencies that are at or near the respective acoustic resonance frequencies.

5. A photoacoustic gas detector for detecting a target gas in an analyte gas, the detector comprising:

a beam shaping arrangement (42, 43, 44) for generating at least two optical beams (A, B) entering said arrangement, each of said beams (A; B) defining an optical path;

a sample cell (20) for receiving the analyte gas, the sample cell (20) being disposed in the path of at least one of said beams (B) in a manner that said beams (A, B) are attenuated differently by said analyte gas;

a photoacoustic cell (10) for receiving said target gas, said photoacoustic cell (10) being capable of at least two acoustic resonances and being disposed in the optical paths of both said beams (A, B), wherein the optical paths of said beams in said photoacoustic cell are different;

an acoustic detector (30) for detecting acoustic signals in the photoacoustic cell.

6. The gas detector of claim 5, wherein said acoustic resonances are longitudinal resonances.

7. The gas detector of claim 5 or 6, wherein the photoacoustic cell has a tubular shape with at least a first and a second coaxial section, the sections having different diameters.

8. The gas detector of claim 7, wherein the optical beams (A, B) are able to enter the first section, whereas at least one of said beams (B) cannot enter the second section.

9. The gas detector of one of claims 5 to 8, further comprising a broadband light source (41).

10. The gas detector of claim 9, further comprising an optical bandpass filter (45) for reducing the optical bandwidth of the beams (A, B).

11. The gas detector of one of claims 5 to 10, further comprising a modulator (46) for modulating the intensity of said beams.

12. The gas detector of one of claims 5 to 11, further comprising an analyzing module for receiving signals from said acoustic detector, said analyzing module being specifically adapted for determining one or more properties of said acoustic resonances and deriving a measure of an amount of the target gas from said properties.

13. A photoacoustic cell for use in a method according to claims 1 to 4, the cell having at least one entry window (14) for entry of two or more optical beams (A,B) and having a first (11), a second (12) and a third section (13), the sections being coaxial, the second section (12) being disposed between the first (11) and the third section (13) and having a smaller diameter than the first and third sections, and the first (11) and third sections (13) having different lengths.

FIG. 1

**FIG. 2**

**FIG. 3**

**FIG. 4**

**FIG. 5**

**European Patent Office**

**EUROPEAN SEARCH REPORT**

Application Number

EP 06 02 6139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | UOTILA J ET AL: "Selective differential photoacoustic method for trace gas analysis" VIBRATIONAL SPECTROSCOPY, ELSEVIER SCIENCE, AMSTERDAM, NL, vol. 38, no. 1-2, 29 July 2005 (2005-07-29), pages 3-9, XP004978643 ISSN: 0924-2031 | 5,9-12 | INV. G01N21/17 |
| A | * pages 4-5; figure 2 * | 1-4,6-8, 13 | |
| X | SNEIDER J ET AL: "PHOTOACOUSTIC GAS DETECTION BASED ON EXTERNAL CAVITY DIODE LASER LIGHT SOURCES" OPTICAL ENGINEERING, SOC. OF PHOTO-OPTICAL INSTRUMENTATION ENGINEERS. BELLINGHAM, US, vol. 36, no. 2, February 1997 (1997-02), pages 482-486, XP000686874 ISSN: 0091-3286 * figure 2 * | 13 | |
| A | CHEN T ET AL: "In situ gas filter correlation: photoacoustic CO detection method for fire warning" SENSORS AND ACTUATORS B, ELSEVIER SEQUOIA S.A., LAUSANNE, CH, vol. 109, no. 2, 14 September 2005 (2005-09-14), pages 233-237, XP004995009 ISSN: 0925-4005 * pages 234-235; figure 2 * | 1,5 | TECHNICAL FIELDS SEARCHED (IPC) G01N |

The present search report has been drawn up for all claims

| Place of search | Date of completion of the search | Examiner |
|---|---|---|
| Munich | 11 May 2007 | Hoogen, Ricarda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1452002 A
- US 20050070803 A
- US 20060123884 A
- WO 03083455 A
- US 7004909 B

### Non-patent literature cited in the description

- Air Monitoring by Laser Photoacoustic Spectroscopy. **M.W. SIGRIST.** Air Monitoring by Spectroscopic Techniques. Wiley, 1994
- Photoacoustic Spectroscopy in Trace Gas Monitoring. Encyclopedia of Analytical Chemistry. Wiley, 2000, vol. 3, 2203
- **A. MIKLÒS ; P. HESS.** *Rev. Sci. Instrum.,* 2001, vol. 72, 1937
- Laser Optoacoustic Spectroscopy. **V.P. ZHAROV ; V.S. LETOKHOV.** Springer Ser. Opt. Sci. Springer, 1986, vol. 37
- **P. HESS.** *Top. Curr. Chem.,* 1983, vol. 111, 1
- **R. GERLACH ; N.H. AMER.** *Appl. Phys.,* 1980, vol. 23, 319
- **A. KARBACH ; P. HESS.** *J. Chem. Phys.,* 1986, vol. 84, 2945
- **C. HORNBERGER ; M. KÖNIG ; S.B. RAI ; W. DEMTRÖDER.** *Chem. Phys.,* 1995, vol. 190, 171
- **F.G.C. BIJNEN ; F.J.M. HARREN ; J. REUSS.** *Rev. Sci. Instrum.,* 1996, vol. 67, 2914
- **M. MATTIELLO ; M. NIKLÈS ; S. SCHILT ; L. THÉVENAZ ; A. SALHI ; D. BARAT ; A. VICET ; Y. ROUILLARD ; R. WENER ; J. KOETH.** *Spectrochim. Acta A,* 2006, vol. 63, 952
- **K.P. KOCH ; W. LAHMANN.** *Appl. Phys. Lett.,* 1978, vol. 32, 289
- **M. NAEGELE ; M.W SIGRIST.** *Appl. Phys. B,* 2000, vol. 70, 895
- **F.J.M. HARREN ; F.G.C. BIJNEN ; J. REUSS ; L.A.C. J. VOESENEK ; C. W.P.M. BLOM.** *Appl. Phys. B,* 1990, vol. 50, 137
- **F.J.M. HARREN ; R. BERKELMANS ; K. KUIPER ; S. TE LINTEL HEKKERT ; P. SCHEEPERS ; R. DEKHUIJZEN ; P. HOLLANDER ; D. H. PARKER.** *Appl. Phys. Lett.,* 1999, vol. 74, 1761
- **J.P. BESSON ; S. SCHILT ; E. ROCHAT ; L. THÉVENAZ.** *Spectrochim. Acta A,* 2006, vol. 63, 899
- **C.F. DEWEY.** Optoacoustic Spectroscopy and Detection. Academic Press, 1977
- **A. MIKLÒS ; A. LÖRINCZ.** *Appl. Phys. B,* 1989, vol. 48, 213
- Photoacoustic and Photothermal Phenomena: 10th International Conference. **A. MIKLÒS ; P. HESS ; A. MOHÀCSI ; J. SNEIDER ; S. KAMM ; S. SCHAEFER.** AIP Conf. Proc. AIP, 1999, vol. 463, 126
- **V. ZENINARI ; V.A. KAPITANOV ; D. COURTOIS ; YU.N. PONOMAREV.** *Infrared. Phys. & Technol.,* 1999, vol. 40, 1
- **A.A. KOSTEREV ; F.K. TITTEL ; D.V. SEREBRYAKOV ; A.L. MALINOVSKY ; I.V. MOROZOY.** *Rev. Sci. Instrum.,* 2005, vol. 76, 043105
- **K. F. LUFT.** *Z. Tech. Phys.,* 1943, vol. 5, 97
- **W. G. FASTIE ; A. H. PFUND.** *J. Opt. Soc. Am.,* 1947, vol. 37, 762
- **S H CHAN.** *Meas. Sci. Technol.,* 1996, vol. 7, 1776
- **B. KOLB.** *J. Chromatogr. A,* 1999, vol. 842, 163